# EUROPÄISCHE PATENTSCHRIFT

(11) **EP 2 431 199 B1**
(45) Veröffentlichungstag und Bekanntmachung des Hinweises auf die Patenterteilung: **17.10.2012**
(21) Anmeldenummer: 11179490.5
(22) Anmeldetag: 31.08.2011
(51) Int. Cl.: B60C 27/08

(54) **Gleitschutzkette mit Flankenschutzabdeckungen**
Anti-skid chain with flank protection covers
Chaîne antidérapante dotée d'un revêtement de protection des flancs

(30) Priorität: 15.09.2010 AT 15342010
(43) Veröffentlichungstag der Anmeldung: 21.03.2012
(73) Patentinhaber: Pewag Schneeketten GmbH & Co KG, 9371 Brückl (AT)
(72) Erfinder: Pengg, Ägyd, 9020 Klagenfurt (AT); Nieß, Bernhard, 8312 Ottendorf (AT)
(74) Vertreter: Matschnig, Franz

(56) Entgegenhaltungen:
- DE-A1- 10 348 636
- RUD Ketten Rieger & Dietz GmbH u. Co. KG: "Felgenschutz RUD-protectAR", , 8. März 2008 (2008-03-08), XP002665153, Gefunden im Internet: URL:http://web.archive.org/web/20080308111 307/http://www.rud.com/de/produkte/schneek etten/protectar.html [gefunden am 2011-12-05]

## Beschreibung

Die gegenständliche Erfindung betrifft eine Flankenschutzabdeckung für eine Gleitschutzkette sowie eine mit einer derartigen Flankenschutzabdeckung ausgerüstete Gleitschutzkette; die hier betrachteten Gleitschutzketten sind insbesondere Gleitschutzketten mit einem Laufnetz mit Spurkreuzen und zumindest einem Seitenstrang, welcher Kettenglieder aufweist und in einem montierten Zustand an einer Flanke eines Fahrzeugrads (insbesondere der Reifenflanke und/oder Felge an der Radaußenseite) anliegt, wobei die Spurkreuze über in jeweils zumindest ein Kettenglied des Seitenstranges eingehängte Anbindungsmittel (z.B. in Form eines Hakens) mit dem Seitenstrang verbunden sind, wobei je Anbindungsmittel eine Flankenschutzabdeckung vorgesehen ist.

Eine Flankenschutzabdeckung der hier betrachteten Art kommt in Gleitschutzketten für Fahrzeugreifen und -räder in Anwendung und dient dem Schutz einer Flanke eines Fahrzeugreifens und/oder Felge, auf dem die betreffende Gleitschutzkette angebracht ist. Es besteht nämlich bei Gleitschutzketten die Gefahr der Beschädigung der Flanke: besonders an der Stelle der Anbindung der Spurkreuze an einen Seitenstrang kann das der Anbindung dienende Element (z.B. ein metallischer Haken), das aufgrund seiner Funktion in der Regel größer ist als die Glieder der Spurkreuze, bei der Berührung der Oberfläche der Radflanke zu einer Beeinträchtigung oder sogar Beschädigung der Oberfläche führen. Durch eine Flankenschutzabdeckung wird das Anbindungselement gewissermaßen verpackt und die Radflanke bleibt unversehrt.

Im Rahmen dieser Offenbarung werden unter "Spurkreuze" jene Ketten- oder Strangteile der Gleitschutzkette verstanden, die über die Lauffläche des Reifens verlaufen und/oder zur Verbindung solcher Ketten/Strangteile mit einem Seitenstrang dienen.

Die EP 2 163 409 offenbart eine Vorrichtung dieser Art, nämlich eine Felgenschutzvorrichtung, welche aus einer aufklappbaren, zweiteiligen Schale besteht, in der ein Kettenglied und ein Haken umfasst werden, wobei in auf der Kette aufgebrachtem Zustand lediglich jener Teil des Hakens, der der Anbindung von Laufnetzteilen dient, aus der Felgenschutzvorrichtung hinausragt. Während diese Vorrichtung ihre Funktion gut erfüllt, ist sie hinsichtlich ihres Aufbaus aufwendig und neigt zudem zur Ansammlung von Schmutz in ihrem Inneren.

Die EP 1520 734 A2 offenbart eine Spannvorrichtung für Schneeketten, bei der das Spurkreuz über Haken in den Seitenstrang eingehängt ist. Ein Kopfteil dieser Spannvorrichtung umgibt jenes Kettenglied des Seitenstrangs, in das ein solcher Haken eingehängt ist, lässt jedoch den Haken selbst frei, sodass dieser nach wie vor mit der Flanke bzw. Felge in Berührung kommen kann.

In der EP 0 976 588 A1 ist eine Flankenschutzvorrichtung beschrieben, die den Haken gänzlich umgibt, samt den zugehörenden Endgliedern der Spurkreuzketten. Dies führt beim Betrieb der Gleitschutzkette zu zusätzlichen Belastungen am Spurkreuz sowie an der Flankenschutzabdeckung selbst, und Ausgleichsbewegungen des Spurkreuzes führen zu Bewegungen der Vorrichtung gegenüber der Reifenseite.

Eine weitere Flankenschutzabdeckung ist unter der Bezeichnung "Rudprotect AR" der Firma RUD Ketten Rieger & Dietz GmbH u. Co KG bekannt geworden. Die als "Öse" bezeichnete Flankenschutzabdeckung verfügt dabei über zwei im Wesentlichen parallele Flügel, die an deren Endbereichen jeweils eine Kettengliedaufnahme in Gestalt eines U-förmigen Profils aufweisen, womit ein Kettenglied von der Öse aufgenommen werden kann.

Die DE 103 48 636 A1 offenbart eine gattungsbildende Flankenschutzvorrichtung mit einem U-förmigen Körper, bei der der Spannstrang außerhalb des Körpers durch eine Halterung geführt ist.

Es ist daher eine Aufgabe der Erfindung, eine mit geringem Aufwand herstellbare und einfach zu montierende Flankenschutzvorrichtung zum Abdecken der Anbindungsstelle zu schaffen, die die oben genannten Nachteile der bekannten Vorrichtungen überwindet.

Diese Aufgabe wird von einer Flankenschutzabdeckung zur Aufnahme eines Kettengliedes eines über der Flanke eines Fahrzeugrads befindlichen Kettenstrangs mit einem U-förmigen Körper, wobei der Körper zwei Flügel aufweist, die entlang eines Rückens verbunden sind, gelöst, indem die Flügel einen Raum zur Aufnahme des Kettenglieds sowie zumindest eines Teils eines in das Kettenglied eingehängten Anbindungselements umgeben und zumindest einer der Flügel an seiner nach innen gewandten Seite einen Vorsprung zum Festhalten des Kettenglieds und/oder des daran eingehängten Anbindungselements zwischen den Flügeln aufweist.

Die Flankenschutzabdeckung kommt wie erwähnt in einer Gleitschutzkette der eingangs erwähnten Art zur Anwendung, bei welcher je Anbindungsmittel eine Flankenschutzabdeckung gemäß der Erfindung vorgesehen ist, welches jeweils das zumindest eine Kettenglied des Seitenstrangs umgibt. Um die Anbindung der Spurkreuze zu erleichtern, kann dabei ein der Anbindung dienender Teil des Anbindungsmittels (bzw. Hakens) aus der Flankenschutzabdeckung hinausragen.

Durch diese besondere Formgebung wird die gestellt Aufgabe auf überraschend einfache und doch zweckmäßige Weise erfüllt. Die U-Form der erfindungsgemäßen Flankenschutzabdeckung gestattet ein einfaches Aufstecken des Bauteils über das an der Anbindungsstelle beteiligte Kettenglied und das Anbindungselement selbst, ähnlich einer Klammer oder Hülse. Bei der zugrundeliegenden U-Form werden die beiden Schenkel des U von den beiden Flügeln gebildet, die an einer Seite (entsprechend der unteren Rundung des U) über einen Rücken zusammenstoßen, während ansonsten die Flügel voneinander unabhängig sind im Wesentlichen zueinander parallel verlaufende bzw. einander gegenüber liegende Klappen bilden - wie die beiden Klappen einer Muschelschale. Dies ergibt eine unaufwändige Herstellung sowie einfache Montage durch Aufstecken.

In einer bevorzugten Realisierung der erfindungsgemäßen Flankenschutzabdeckung ist der U-förmige Körper, nämlich die zwei Flügel und der Rücken, einstückig ausgebildet, um eine zusätzliche Vereinfachung der Bauweise zu erreichen.

Um ein sicheres Fixieren der erfindungsgemäßen Flankenschutzabdeckung zu erreichen, kann das Halteelement als nach innen vorspringende Nase ausgebildet sein, die das Kettenglied umgreift (beispielsweise in Zusammenwirken mit dem Boden des Raums zur Aufnahme des Kettenglieds) oder in dessen Auge eingreift, und so dieses in einem entspannten Zustand der Flankenschutzabdeckung festhält. Zudem kann der Aufsteckvorgang dadurch erleichtert werden, dass aufgrund der Elastizität des Rückens die beiden Flügel derart auseinander biegbar sind, dass zumindest das Einführen des Kettenglieds ermöglicht ist.

Um ein seitliches Verrutschen der Abdeckung gegenüber der Anbindungsstelle auf der Gleitschutzkette zu verhindern, kann ein Flügel an seiner Innenseite eine Leiste aufweisen, die an der Innenseite des Rückens beginnt und von diesem weg verläuft, wobei das Halteelement auf der Leiste des Flügels angeordnet ist. Dabei kann jeder der beiden Flügel an seiner Innenseite eine Leiste dieser Art aufweisen, wobei das Halteelement auf der Leiste jenes Flügels angeordnet ist, welcher als der Flanke aufliegend vorgesehen ist.

Des Weiteren ist es vorteilhaft, wenn jener Flügel, welcher dazu vorgesehen ist, dass er der Radseite aufliegt, eine im Wesentlichen ebene äußere Auflagefläche aufweist. Der diesem Flügel gegenüber liegende Flügel kann ferner eine schalenartige Krümmung haben, die so ausgelegt ist, dass ein an einem zwischen den Flügeln festgehaltenen Kettenglied eingehängtes Anbindungsmittel an seinem Ort gehalten werden kann. Die erwähnte schalenartige Krümmung ist hierbei nach außen (bzw. vorne) gewölbt, sodass sich im Inneren des zweiten Flügels eine Hohlwölbung ergibt.

Die Erfindung einschließlich weiterer Vorzüge wird im Folgenden anhand eines nicht einschränkenden Ausführungsbeispiels näher erläutert, das in den Zeichnungen dargestellt ist. Darin ist schematisch gezeigt:
- Fig. 1: die Außenseite eines Reifens mit einer Gleitschutzkette mit erfindungsgemäßen Flankenschutzabdeckungen;
- Fig. 2: einen vergrößerten Ausschnitt der Fig. 1, die eine der Flankschutzabdeckungen in montierter Position zeigt;
- Fig. 3: einen Abschnitt eines äußeren Seitenstranges der Gleitschutzkette aus Fig. 1 - ohne Flankenschutzabdeckung - mit einem in ein Kettenglied des Seitenstranges einge-

- Fig. 4: hängten Haken zur Anbindung des Seitenstranges an ein Spurkreuz in einer perspektivischen Ansicht; den Abschnitt des Seitenstranges der Fig. 3 mit darauf montierter Flankenschutzabdeckung;
- Fig. 5: die Flankenschutzabdeckung in einer perspektivischen Ansicht;
- Fig. 6 bis 9: die Flankenschutzabdeckung der Fig. 5 in je einer Vorderansicht, Aufsicht und Seitenansicht sowie in einer Schnittansicht längs der Mittelebene (Linie m in Fig. 6 und 7); und
- Fig. 10 bis 13: die Flankenschutzabdeckung in auf den Seitenstrang aufgestecktem Zustand in den Fig. 6 bis 9 entsprechenden Ansichten, nämlich in je einer Vorderansicht, Aufsicht, Seitenansicht sowie Schnittansicht längs der Mittelebene.

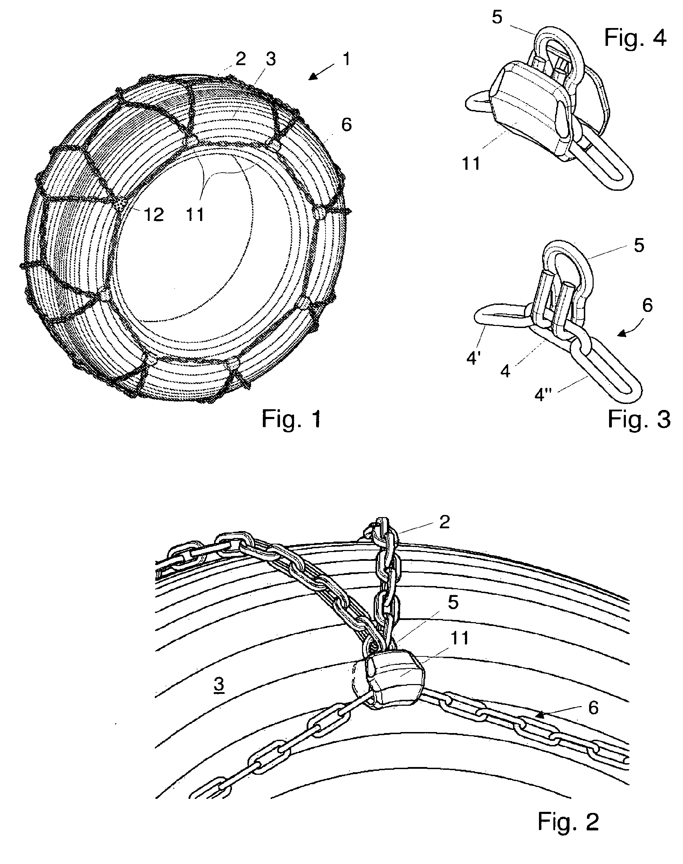

Wie in Fig. 1 und 2 gezeigt weist eine erfindungsgemäße Gleitschutzkette 1 ein Laufnetz mit Spurkreuzen 2 und einen in einem auf ein Rad aufgezogenen Zustand an einer Reifenflanke 3 anliegenden Seitenstrang 6 auf. Unter Seitenstrang wird hierbei ein entlang der Reifenflanke verlaufender Randstrang der Gleitschutzkette 1 verstanden, der bevorzugter Weise ringartig in sich geschlossen ausgebildet sein wird und zumindest stückweise, häufiger jedoch zur Gänze, als Kette realisiert sein kann. In der gezeigten Ausführungsform ist der Seitenstrang 6 nicht als Spannstrang verwendet; in anderen Ausführungen kann der Seitenstrang durch Einbeziehung von z.B. Feder- oder Zugelementen als Spannstrang ausgebildet sein.

Wie anhand Fig. 3 ersichtlich ist, sind die Spurkreuze 2 sind über in je zumindest ein Kettenglied 4 des Seitenstranges 6 eingehängte Anbindungsmittel, die hier als Haken 5 realisiert sind, mit dem Seitenstrang 6 verbunden. Der Ort, wo ein Anbindungsmittel/Haken 5 am Seitenstrang befestigt ist, wird im Folgenden auch als Anbindungsstelle bezeichnet. Je Anbindungsstelle ist eine den Haken 5 und das zumindest eine Kettenglied 4 umfassende Flankenschutzabdeckung 11 vorgesehen, die in der gezeigten Form als über Kettenglied 4 und Haken 5 aufsteckbarer Clip ausgebildet ist. Ohne diesen Clip kann der metallische Haken 5 die Oberfläche der Radflanke berühren und könnte dort zu einer Beeinträchtigung der Oberfläche, z.B. ein Zerkratzen einer Radfelge, oder sogar Beschädigung, beispielsweise durch Scheuern auf der Reifenflanke bei ungenauer Montage, führen. Der als Flankenschutzabdeckung dienenden Clip 11, weist gegenüber der Radflanke lediglich eine verhältnismäßig glatte Fläche auf, wodurch eine Beeinträchtigung der Radflanke vermieden wird.

Zudem ist es möglich, um die Montage und Demontage zu erleichtern, zumindest einen der Clips 11 besonders zu kennzeichnen, beispielsweise durch eine besondere Farbgebung. So ist in der Darstellung gemäß Fig. 1 ein Clip 12 besonders gekennzeichnet (punktiert dargestellt). Durch die Kennzeichnung des Clips 12 kann eine genaue Stellung der Kette am Rad angezeigt werden. Die Kennzeichnung kann beispielsweise dadurch erfolgen, dass der Clip 12 eine andere Farbe als die anderen Clips 11 aufweist.

Fig. 4 zeigt die in Fig. 3 gezeigte Anbindungsstelle mit einem aufgesteckten Clip 11. Das Kettenglied 4 befindet sich vollständig im Inneren der Abdeckung 11, während der der Anbindung der Spurkreuze 2 dienende Teil des Hakens 5 aus ihr hinausragt.

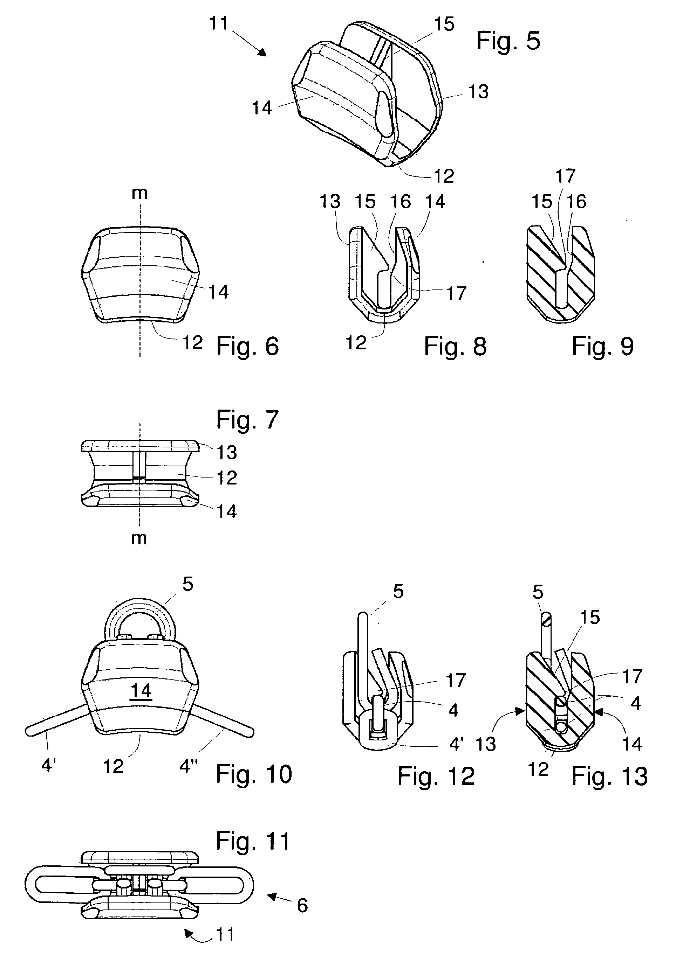

Fig. 5 bis 9 zeigen den Clip 11 in verschiedenen Ansichten, und zwar Fig. 5 eine perspektivische Ansicht, Fig. 6 eine Vorderansicht, Fig. 7 eine Aufsicht, Fig. 8 eine Seitenansicht (von links) sowie Fig. 9 eine Schnittansicht längs der Mittelebene m (Fig. 6 und 7) des Clips. Die Bezeichnungen "oben"/"unten", "vorne"/"hinten", "rechts"/"links" od.dgl. beziehen sich auf eine Lage, in der der Clip 11 mit seinem Rücken 12 auf einer (horizontalen) Unterlage ruht, während die beiden Flügel 13, 14 sich nach oben erstrecken und jeweils ein Flügel nach vorne und nach hinten orientiert ist, und nicht auf eine etwaige momentane Ausrichtung des Clips im Raum oder auf einer Kette (die auf einem gegebenenfalls sogar rotierenden Rad montiert sein kann). Bei dieser Bezeichnungskonvention wird die hintere Seite von jenem Flügel 13 gebildet, mit der der Clip in montiertem Zustand auf der Flanke des Rades aufliegt, während der vordere Flügel 14 in einem Abstand zu der Flanke verläuft und auf diese Weise bei einer Ansicht auf die Seite eines Rades die vordere Seite des Clips 11 betrachtet wird.

Der Körper des Clips 11 wird im Wesentlichen von zwei Flügeln oder Wangen 13, 14 gebildet, die lediglich entlang ihrer in Fig. 6 unten verlaufenden Kante über einen Rücken 12 verbunden sind, ansonsten jedoch nicht miteinander in Kontakt stehen. Dadurch ergibt sich eine im Wesentlichen U-förmige Grundgestalt. Der die Verbindung zwischen den beiden Flügeln bildende Rücken 12 befindet sich vorzugsweise, wie bei der hier gezeigten Ausführungsform, an jener Seite des Clips, der in montiertem Zustand zur Randnabe hin orientiert ist (vgl. Fig. 2 und 10).

Der Clip weist eine Symmetrieebene m auf, die durch die Mitte des Rückens 12 und der Flügel 13, 14 verläuft. Die beiden Flügel 13 und 14 können zudem zueinander spiegelbildlich sein, jedoch sind sie in der gezeigten Ausführungsform geringfügig unterschiedlich ausgeführt, wie nachfolgend weiter erläutert.

Die Flügel 13, 14 umfassen einen Raum, der zur Aufnahme eines Kettenglieds 4 des Seitenstrangs ausgelegt ist, sowie zur Aufnahme zumindest jenes Teils des in den Seitenstrangs eingehängten Hakens 5 (oder allgemeiner: des Elements zum Anbinden der Spurkreuze), der auf der Flanke 3 des Rades aufliegen würde, sofern keine Flankenschutzvorrichtung angebracht wäre. Auf der Innenseite der Flügel 13, 14, nämlich entlang der Mittellinie verläuft jeweils eine Leiste (oder Steg) 15, 16. Eine der Leisten, vorzugsweise die auf der Innenseite des hinteren Flügels 13 vorhandene hintere Leiste 15, weist eine Nase 17 auf. Die Nase 17 des gezeigten Ausführungsbeispiels ist im Einklang mit ihrer Eigenschaft als Vorsprung einstückig mit der Leiste 15 bzw. dem Flügel 13.

Fig. 10 bis 13 zeigen den Clip 11 zusammen mit einem Stück des Seitenstrangs (vgl. Fig. 4), genauer in einem auf eine Anbindungsstelle (= Kettenglied 4 mit einem Haken 5) aufgestecktem Zustand, wobei die an das Kettenglied 4 anschließenden Kettenglieder 4', 4" des Seitenstrangs 6 hervorragen. Hinsichtlich der gezeigten Ansichten entsprechen die Fig. 10 bis 13 jeweils den Fig. 6 bis 9. Die Fig. 10 bis 13 verdeutlichen, wie der Clip auf dem Kettenglied 4 und dem Haken 5 gehalten wird. Wie besonders den Fig. 12 und 13 zu entnehmen ist, halten die Leisten 15, 16 das Kettenglied 4 in einer aufrechten Position in dem Clip und verhindern zudem ein seitliches Verrutschen des Hakens 5, indem die Leisten zwischen den beiden Schenkeln des Hakens eingreifen. Ein Entweichen des Kettenglieds 4 nach oben wird durch die Nase 17 verhindert, die somit als vorspringendes Haltemittel gemäß der Erfindung dient.

Bezugnehmend auf Fig. 8 und 12 weist der hintere Flügel 13 eine flache, vorzugsweise ebene, Außenfläche auf, die keine Vorsprünge oder Grate aufweist und mit der der Clip 11 auf der Radflanke aufliegen kann, ohne diese zu beschädigen. Der vordere Flügel 14 dagegen ist vorzugsweise etwas nach außen (d.h. nach vorne) gewölbt, um ein besseres Festhalten der im Inneren des Clips gehaltenen Elemente des Seitenstrangs zu erreichen.

Der Körper des Clips 11 ist vorzugsweise einstückig ausgebildet und besteht aus einem formstabilen Kunststoff der zumindest beim Rücken 12 eine gewisse elastische Verformbarkeit zulässt, wie z.B. Polyamid. Auch andere Kunststoffe, die nicht zu spröd sind, können verwendet werden, wie z.B. Polypropylen, Polyethylen oder Ähnliche.

Wenn ein Clip 11 auf eine Anbindungsstelle montiert wird, so wird der Clip derart einem Haken 5 aufgeschoben, dass der hintere Steg zwischen die beiden Schenkel des Hakens fasst; durch die Elastizität des Materials des Clip-Körpers öffnet sich der Clip soweit, dass das Kettenglied 4 an der Nase 17 vorbei geführt werden kann und die Nase 17 in der Endposition einschnappt. Die schräge Oberkante des Stegs 15 erleichtert hierbei das Einführen des Kettenglieds. Zum Lösen des Clips kann dieser wiederum elastisch etwas aufgebogen werden, damit die Nase das Kettenglied freigibt, jedoch ist ein Abnehmen des Clips in der Regel nicht erforderlich.

Wie dem Fachmann unmittelbar einleuchten wird, ist die vorliegende Erfindung nicht auf das gezeigte Ausführungsbeispiel eingeschränkt; vielmehr erstreckt sie sich auf alle Ausführungsformen, die der Fachmann im Rahmen des Schutzbereichs der Ansprüche erfassen und ausführen kann.

## Patentansprüche

1. Flankenschutzabdeckung (11) zur Aufnahme eines Kettengliedes (4) eines über der Flanke (3) eines Fahrzeugrads befindlichen Kettenstrangs, mit einem U-förmigen Körper, wobei der Körper zwei Flügel (13, 14) aufweist, die entlang eines Rückens (12) verbunden sind, und die Flügel (13, 14) einen Raum zur Aufnahme des Kettenglieds (4) sowie zumindest eines Teils eines in das Kettenglied (4) eingehängten Anbindungselements (5) umgeben **dadurch gekennzeichnet, dass** zumindest einer der Flügel (13) an seiner nach innen gewandten Seite einen Vorsprung (17) zum Festhalten des Kettenglieds (4) und/oder des daran eingehängten Anbindungselements (5) zwischen den Flügeln aufweist.

2. Flankenschutzabdeckung nach Anspruch 1, **dadurch gekennzeichnet, dass** der U-förmige Körper, nämlich die zwei Flügel (13,14) und der Rücken (12), einstückig ausgebildet ist.

3. Flankenschutzabdeckung nach Anspruch 1 oder 2, **dadurch gekennzeichnet, dass** der Vorsprung als nach innen vorspringende Nase (17) ausgebildet ist, die das Kettenglied (4) umgreift und dieses in einem entspannten Zustand der Flankenschutzabdeckung (11) festhält, und die beiden Flügel (13, 14) aufgrund der Elastizität des Rückens (12) in einem Ausmaß auseinander biegbar sind, welches zumindest das Einführen des Kettenglieds (4) ermöglicht.

4. Flankenschutzabdeckung nach einem der Ansprüche 1 bis 3, **dadurch gekennzeichnet, dass** ein Flügel (13) an seiner Innenseite eine Leiste (15) aufweist, die an der Innenseite des Rückens (12) beginnt und von diesem ausgehend auf der Innenseite des Flügels (13) verläuft, wobei der Vorsprung (17) zum Festhalten des Kettenglieds auf der Leiste (15) angeordnet ist.

5. Flankenschutzabdeckung nach Anspruch 4, **dadurch gekennzeichnet, dass** jeder der beiden Flügel (13, 14) an seiner Innenseite eine Leiste (15, 16) aufweist, die an der Innenseite des Rückens (12) beginnt und von diesem ausgehend auf der Innenseite des jeweiligen Flügels (13, 14) verläuft, wobei der Vorsprung (17) auf der Leiste (15) jenes Flügels (13) angeordnet ist, welcher als der Flanke (3) aufliegend vorgesehen ist.

6. Flankenschutzabdeckung nach Anspruch 4 oder 5, **dadurch gekennzeichnet, dass** die Leiste (15, 16) zwischen zwei Schenkel des in das Kettenglied (4) eingehängten Anbindungselements (5) eingreift.

7. Flankenschutzabdeckung nach Anspruch 4, 5 oder 6, **dadurch gekennzeichnet, dass** die Leiste (15, 16) entlang einer Symmetrieebene (m) verläuft, die durch die Mitte der Flügel (13, 14) verläuft.

8. Flankenschutzabdeckung nach einem der vorangehenden Ansprüche, **dadurch gekennzeichnet, dass** sich das zwischen den Flügeln (13, 14) aufgenommene Kettenglied (4) in einer aufrechten Position befindet.

9. Flankenschutzabdeckung nach einem der Ansprüche 1 bis 5, **dadurch gekennzeichnet, dass** ein erster Flügel (13), welcher als der Radflanke (3) aufliegend vorgesehen ist, eine im Wesentlichen ebene äußere Auflagefläche aufweist.

10. Flankenschutzabdeckung nach Anspruch 6, **dadurch gekennzeichnet, dass** der dem ersten Flügel (13) gegenüber liegende Flügel (14) eine nach außen gewölbte Krümmung aufweist, die dazu geeignet ist, ein an einem zwischen den Flügeln (13, 14) festgehaltenen Kettenglied (4) eingehängtes Anbindungsmittel (5) zu halten.

11. Gleitschutzkette (1) mit einem Laufnetz mit Spurkreuzen (2) und zumindest einem Seitenstrang (6), welcher Kettenglieder aufweist und in einem montierten Zustand an einer Flanke (3) eines Fahrzeugrads anliegt, wobei die Spurkreuze (2) über in jeweils zumindest ein Kettenglied (4) des Seitenstranges (6) eingehängte Anbindungsmittel (5) mit dem Seitenstrang verbunden sind, wobei je Anbindungsmittel (5) eine das Anbindungsmittel (5) umfassende Flankenschutzabdeckung (11) nach einem der vorangehenden Ansprüche vorgesehen ist, welches jeweils das zumindest eine Kettenglied (4) des Seitenstrangs umgibt.

12. Gleitschutzkette nach Anspruch 11, bei welcher ein der Anbindung der Spurkreuze (2) dienender Teil des Anbindungsmittel (5) aus der Flankenschutzabdeckung hinausragt.

13. Gleitschutzkette nach Anspruch 11 oder 12, bei welcher das in das jeweilige Kettenglied (4) des Seitenstranges eingehängte Anbindungsmittel (5) ein Haken ist.

## Claims

1. A sidewall protection cover (11) for receiving a chain link (4) of a chain strand situated over the sidewall (3) of a vehicle wheel, said sidewall protection cover having a U-shaped body, wherein the body has two wings (13, 14) that are connected along a spine (12), and the wings (13, 14) surround a space for receiving the chain link (4) as well as at least part of a connection element (5) fixed in the chain link (4), **characterised in that** at least one of the wings (13) has a protrusion (17) on its inwardly facing side for gripping the chain link (4), and/or the connection element (5) fixed thereon, between the wings.

2. The sidewall protection cover according to claim 1, **characterised in that** the U-shaped body, namely the two wings (13, 14) and the spine (12), is formed in one piece.

3. The sidewall protection cover according to claim 1 or 2, **characterised in that** the protrusion is formed as an inwardly protruding lug (17), which surrounds the chain link (4) and grips it in a relaxed state of the sidewall protection cover (11), and, due to the resilience of the spine (12), the two wings (13, 14) can be bent apart from one another to such an extent that the chain link (4) can at least be introduced.

4. The sidewall protection cover according to one of claims 1 to 3, **characterised in that** one wing (13) has a strip (15) on its inner face, said strip beginning at the inner face of the spine (12) and extending away therefrom over the inner face of the wing (13), wherein the protrusion (17) is arranged on the strip (15) to grip the chain link.

5. The sidewall protection cover according to claim 4, **characterised in that** each of the two wings (13, 14) has a strip (15, 16) on its inner face, said strip beginning at the inner face of the spine (12) and extending away therefrom over the inner face of the respective wing (13, 14), wherein the protrusion (17) is arranged on the strip (15) of the wing (13) that is provided to rest against the sidewall (3).

6. The sidewall protection cover according to claim 4 or 5, **characterised in that** the strip (15, 16) engages between two branches of the connection element (5) fixed in the chain link (4).

7. The sidewall protection cover according to claim 4, 5 or 6, **characterised in that** the strip (15, 16) extends along a plane of symmetry (m), which extends through the centre of the wings (13, 14).

8. The sidewall protection cover according to one of the preceding claims, **characterised in that** the chain link (4) received between the wings (13, 14) is situated in an upright position.

9. The sidewall protection cover according to one of claims 1 to 5, **characterised in that** a first wing (13), which is provided to rest against the sidewall (3) of the wheel, has a substantially planar outer support face.

10. The sidewall protection cover according to claim 6, **characterised in that** the wing (14) resting opposite the first wing (13) has an outwardly curved curvature, which is suitable for holding a connection means (5) fixed on a chain link (4) gripped between the wings (13, 14).

11. An antiskid chain (1) comprising a chain mesh having track crosspieces (2) and at least one side strand (6) having chain links and resting against a sidewall (3) of a vehicle wheel when installed, wherein the track crosspieces (2) are connected to the side strand via connection means (5) fixed in at least one chain link (4) of the side strand (6) in each case, wherein one sidewall protection cover (11) according to one of the preceding claims is provided per connection means (5) and encloses said connection means (5), said sidewall protection cover surrounding the at least one chain link (4) of the side strand in each case.

12. The antiskid chain according to claim 11, wherein a part of the connection means (5) used for connection of the track crosspieces (2) protrudes from the sidewall protection cover.

13. The antiskid chain according to claim 11 or 12, wherein the connection means (5) fixed in the respective chain link (4) of the side strand is a hook.

## Revendications

1. Revêtement de protection de flancs (11) servant à recevoir un maillon (4) d'un brin de chaîne se trouvant sur le flanc (3) d'une roue de véhicule, comportant un corps en forme de U, le corps présentant deux pans (13, 14) qui sont reliés le long d'une partie dorsale (12), lesdits pans (13, 14) entourant un espace servant à loger le maillon (4) ainsi qu'au moins une partie d'un élément de raccordement (5) accroché dans le maillon (4), **caractérisé en ce qu'**au moins un des pans (13) présente sur son côté tourné vers l'intérieur une partie faisant saillie (17) servant à maintenir le maillon (4) et/ou l'élément de raccordement (5) accroché à ce dernier entre les pans.

2. Revêtement de protection de flancs selon la revendication 1, **caractérisé en ce que** le corps en forme de U, à savoir les deux pans (13, 14) et la partie dorsale (12), est réalisé d'un seul tenant.

3. Revêtement de protection de flancs selon la revendication 1 ou 2, **caractérisé en ce que** la partie faisant saillie est réalisée comme un ergot (17) faisant saillie vers l'intérieur, lequel saisit le maillon (4) et maintient ce dernier dans un état desserré du revêtement de protection de flancs (11), et **en ce que** les deux pans (13, 14) peuvent être courbés à part dans une certaine mesure du fait de l'élasticité de la partie dorsale (12), ce qui permet au moins l'introduction du maillon (4).

4. Revêtement de protection de flancs selon l'une quelconque des revendications 1 à 3, **caractérisé en ce qu'**un pan (13) présente sur son côté intérieur une baguette (15), qui commence au niveau du côté intérieur de la partie dorsale (12) et qui s'étend en partant de celle-ci sur le côté intérieur du pan (13), sachant que la partie faisant saillie (17) servant à maintenir le maillon est disposée sur la baguette (15).

5. Revêtement de protection des flancs selon la revendication 4, **caractérisé en ce que** chacun des deux pans (13, 14) présente sur son côté intérieur une baguette (15, 16), qui commence au niveau du côté intérieur de la partie dorsale (12) et qui s'étend en partant de celle-ci sur le côté intérieur de chaque pan (13, 14), sachant que la partie faisant saillie (17) est disposée sur la baguette (15) du pan (13) qui est prévu en applique sur le flanc (3).

6. Revêtement de protection de flancs selon la revendication 4 ou 5, **caractérisé en ce que** la baguette (15, 16) vient en prise entre les deux branches de l'élément de raccordement (5) accroché dans le maillon (4).

7. Revêtement de protection des flancs selon la revendication 4, 5 ou 6, **caractérisé en ce que** la baguette (15, 16) s'étend le long d'un plan de symétrie (m), qui s'étend à travers le centre des pans (13, 14).

8. Revêtement de protection de flancs selon l'une quelconque des revendications précédentes, **caractérisé en ce que** le maillon (4) logé entre les pans (13, 14) se trouve dans une position verticale.

9. Revêtement de protection des flancs selon l'une quelconque des revendications 1 à 5, **caractérisé en ce qu'**un premier pan (13) qui est prévu en applique sur le flanc de roue (3) présente une surface d'appui extérieure essentiellement plane.

10. Revêtement de protection des flancs selon la revendication 6, **caractérisé en ce que** le pan (14) faisant face au premier pan (13) présente une courbure cintrée vers l'extérieur, laquelle est appropriée pour maintenir un élément de raccordement (5) accroché au niveau d'un maillon (4) maintenu entre les pans (13, 14).

11. Chaîne antidérapante (1) comportant un maillage de roulement doté de croix de connexion (2) et au moins un brin latéral (6) qui présente des maillons et repose à l'état monté sur un flanc (3) d'une roue de véhicule, sachant que la croix de connexion (2) est reliée au brin latéral par l'intermédiaire de moyens de raccordement (5) accrochés dans respectivement au moins un maillon (4) du brin latéral (6), sachant que selon le moyen de raccordement (5), un revêtement de protection de flancs (11) selon l'une quelconque des revendications précédentes, comportant le moyen de raccordement (5) est prévu, lequel moyen de raccordement entoure respectivement le maillon (4) au moins au nombre d'un du brin latéral.

12. Chaîne antidérapante selon la revendication 11, dans le cadre de laquelle une partie du moyen de raccordement (5) servant au raccordement de la croix de connexion (2) dépasse du revêtement de protection de flancs.

13. Chaîne antidérapante selon la revendication 11 ou 12, dans le cadre de laquelle le moyen de raccordement (5) accroché dans le maillon (4) respectif du brin latéral est un crochet.
